# EUROPÄISCHE PATENTANMELDUNG

(11) **EP 1 055 442 A2**
(43) Veröffentlichungstag der Anmeldung: **29.11.2000**
(21) Anmeldenummer: 00810435.8
(22) Anmeldetag: 19.05.2000
(51) Int. Cl.: B01D 21/02, B01D 21/28, B01D 21/20, B01D 21/24, B01D 21/26

(54) **Reinigungsverfahren und Kläranlage hierzu**

(30) Priorität: 26.05.1999 CH 98399
(71) Anmelder: U. Ammann Maschinenfabrik AG, CH-4900 Langenthal (CH)
(72) Erfinder: Isch, Daniel, 4922 Bützberg (CH)
(74) Vertreter: Roshardt, Werner Alfred, Dipl.-Phys.

(57) **Zusammenfassung**

Beim Verfahren zur Reinigung einer Trübe wird diese zum Erreichen einer äußerst effizienten Schlammabsetzung auf ihrem reinigenden Absetzweg in einer horizontalen Strömungsrichtung mit vernachlässigbarer vertikaler und mit vernachlässigbarer antiparalleler Strömungsrichtungskomponente geführt. Hierzu wird die Trübe an einer Seite eines bevorzugt quaderförmigen Absetzbehälters der Kläranlage eingebracht und das gereinigte Prozeßwasser über den oberen Rand der gegenüberliegenden Behälterseite abgelassen. Die Kläranlage ist derart konzipiert, daß sie in komplett montiertem Zustand per Lastwagen oder Bahn transportierbar ist und auf platzsparende Weise mehrere Absetzbehälter nebeneinander stellbar sind.

## Beschreibung

Die Erfindung betrifft ein Verfahren zur Reinigung einer Trübe gemäß Patentanspruch 1 und eine Vorrichtung, eine sog. Kläranlage gemäß dem Oberbegriff des Patentanspruchs 4 zur Durchführung dieses Reinigungsverfahrens.

### Stand der Technik

Bevorzugter Einsatz der erfindungsgemäßen Vorrichtung (Kläranlage) sind die Industriebereiche "Steine und Erden". Aufgrund der verschiedenen Gesetzgebungen muß u.a. auch ein Kieswerkbetreiber das Waschwasser für den erzeugten Schotter, Kies, etc. von den darin enthaltenen (anorganischen) Partikeln (=Trübe) befreien, bevor es in öffentliche Gewässer als gereinigtes Prozeßwasser abgeleitet werden kann. Wird dieses Prozeßwasser für weitere Wasch- und Aufbereitungsprozesse verwendet, sollte ebenfalls diese Reinigung vorgenommen werden. Die im Reinigungsprozeß abzutrennenden Partikel haben einen Querschnitt von etwa 100 Mikrometern und kleiner. Zur Beschleunigung des Sedimentationsprozesses für diese Partikel werden der Trübe sogenannte Flockungsmittel oder Flockungshilfsmittel beigesetzt, welche mit den in der wässrigen Trübe dispers verteilten Partikeln größere Agglomerate, sog. Flocken bilden. Eine Beimischung des Flockungsmittels erfolgt in einem Einlaufkanal vor dem Eintritt der Trübe in den Absetzbehälter.

Bekannte Kläranlagen, wie sie insbesondere in Kieswerkbetrieben eingesetzt wurden, hatten einen zylindrischen Absetzbehälter, wobei dessen Höhen-zu-Durchmesserverhältnis stark variieren konnte. In diesem Absetzbehälter stellten sich aufgrund der Erdanziehung drei Zonen ein: Zuoberst befand sich eine Klarwasserzone, in der Mitte eine Sedimentationszone und zuunterst ein sog. Schlammpuffer. In der Klarwasserzone sammelte sich das gereinigte Prozeßwasser an, welches dann über den oberen Rand des Absetzbehälters, der sog. Überlaufzone ablief. Dieses Prozeßwasser, daher der Name, konnte für weitere Waschprozesse des "Kieses" verwendet werden, sofern es nicht in öffentliche Gewässer abgeleitet wurde. Der sich im Schlammpuffer ansammelnde Schlamm wurde taktweise oder nach einer Ablangerungshöhenmessung abgepumpt. Zur Schlammeindickung und zum Schlammtransport war ein vertikales, sich um eine vertikale Achse langsam drehendes Krählwerk mit radial angeordneten Armen vorhanden. Die Ausbildung der Wand des Absetzbehälters war dem Radius dieser Arme angepaßt, woraus dessen kreiszylindrische Form resultierte. Durch die rotierende Bewegung des Krählwerkes wurde der Schlamm zu einer zentral gelegenen Schlammabsaug- bzw. --entnahmestelle bewegt. Bei einigen der bekannten Kläranlagen ist dieser zentrische Bereich des Absetzbehälters auch nach unten sich verjüngend ausgebildet worden, um so den Schlamm gezielt zu einem Entnahmeort zu führen.

### Aufgabe der Erfindung

Aufgabe der Erfindung ist es, ein Verfahren aufzuzeigen sowie eine Vorrichtung zu schaffen, mit dem bzw. mit der gegenüber den bekannten Vorrichtungen (Kläranlagen) eine äußerst effiziente Schlammabsetzung erreichbar ist.

### Lösung der Aufgabe

Im Gegensatz zu den bekannten Kläranlagen wird bei der erfindungsgemäßen Vorrichtung nicht mehr das ganze Augenmerk darauf gerichtet, daß die Arme des Krählwerkes optimal im Absetzbehälter bewegbar sind, der aus diesem Grund auch immer kreiszylindrisch ausgebildet worden ist.

Um zur Erfindung zu gelangen, ist zuerst der Absetzprozeß studiert und eine optimale Lösung hierzu gesucht worden. Hierbei ist man zu dem Schluß gekommen, daß für eine optimale Sedimentierung die mit Partikeln beladene Trübe möglichst lange in einer laminaren zum Gravitationsfeld horizontalen Richtung geführt werden muß.

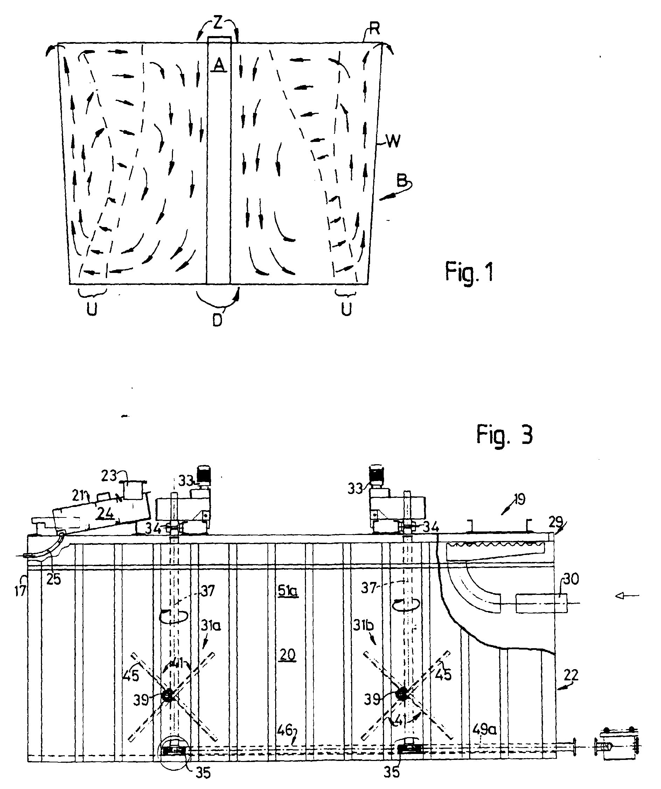

Auf- und absteigende mit abzusetzenden Partikeln beladene Flüssigkeitsströmungen, wie sie bei den bekannten oben beschriebenen Anlagen üblich waren, sollten vermieden werden. Die Strömungsverhältnisse bekannter Anlagen sind aufgrund dieser Überlegungen ermittelt und in **Figur 1** dargestellt worden. Der Absetzbehälter **B** einer bekannten Kläranlage war, wie oben ausgeführt, mit einer kreiszylindrischen Wand **W** versehen, über deren oberen Rand **R** das Prozeßwasser ablief. Der Zulauf **Z** der Trübe befand sich im oberen Bereich des Behälters **B** in dessen Zentrum. Die Drehachse **A** des Krählwerkes war vertikal angeordnet (Drehrichtung des Krählwerkes ist mit **D** gekennzeichnet). Von dieser Achse **A** gingen die hier nicht dargestellten Arme des Krählwerkes bis in die unmittelbare Nähe der Wand **W** radial nach außen. Durch die kreiszylindrische Form des Absetzbehälters **B** und die Ein- und Überströmverhältnisse ergab sich eine im Zentrum nach unten und an den Außenwänden eine nach oben gerichtete Strömung, die durch eine Strömungsumkehrzone **U** verbunden waren. Für eine Schlammsedimentierung war jedoch lediglich diese Strömungsumkehrzone **U** geeignet.

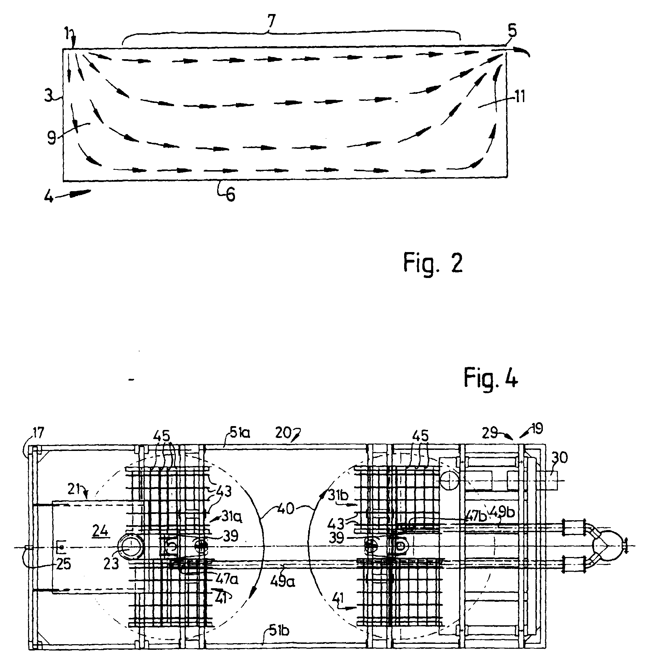

Die Erfindung schlägt nun einen völlig anderen Weg ein. Vereinfacht ausgedrückt, "vergißt" die Erfindung vorerst einmal das Krählwerk sowie die Homogenisierung des sich absetzenden Schlammes und den nachfolgenden Schlammabzug. Bei der Erfindung wird das Hauptaugenmerk im Gegensatz zum Stand der Technik auf einen optimalen Absetzvorgang der Partikel aus der Trübe gerichtet. Dieser optimale Absetzvorgang ist, wie die Darstellung der **Figur 2** zeigt, dadurch zu erreichen, daß der Hauptströmungsweg horizontal zum Gravitationsfeld verläuft. In diesem Bereich treten nämlich keine das Absetzen behindernde Strömungen mehr auf.

Um einen möglichst lang horizontal verlaufenden Strömungsweg zu erreichen, wird auf einen kreiszylinderischen Absetzbehälter verzichtet; dieser wird jetzt quaderförmig ausgebildet. Wird nun anstelle des bekannten kreiszylindrischen Behälters ein quaderförmiger verwendet, so kann dieser zudem derart konstruiert werden, daß er auf Straße und Schiene transportierbar ist und zudem noch eine platzsparende Aufstellung mehrerer Behälter nebeneinander möglich ist.

### Ausführungsbeispiele der Erfindung

Im folgenden werden Beispiele des erfindungsgemässen Verfahrens und der erfindungsgemässen Vorrichtung anhand der Zeichnungen näher erläutert sowie deren Vorteil gegenüber den bekannten Anlagen hervorgehoben. Es zeigen:
- Fig. 1: ein Strömungsbild einer bekannten, in einem Querschnitt skizzierten Kläranlage mit einem kreiszylindrischen Absetzbehälter;
- Fig. 2: ein Strömungsbild in einer erfindungsgemäßen Kläranlage in einem Längsquerschnitt durch deren Mitte mit einem quaderförmigen Absetzbehälter;
- Fig. 3: eine Seitenansicht einer erfindungsgemäßen Kläranlage und
- Fig. 4: eine Draufsicht.

Bei dem in **Figur 2** gezeigten Strömungsbild erfindungsgemässer unten beschriebener Kläranlagen ist der Trübezulauf **1** auf der linken Seite **3** eines quaderförmigen Absetzbehälters **4** angeordnet. Geklärtes Prozeßwasser fließt über den rechten oberen Rand **5** ab. Auffällig gegenüber der Strömungsausbildung einer bekannten Kläranlage in **Figur 1** ist hier ein großer Bereich **7**, der sich annähernd über die gesamte Länge des Absetzbehälters **4** hinzieht, in dem die Flüssigkeitsströmung horizontal mit vernachlässigbarer vertikaler und mit vemachlässigbarer antiparalleler Strömungsrichtungskomponente verläuft. In diesem Gebiet erfolgt die Schlammabscheidung; der Schlamm lagert sich auf dem Behälterboden **6** ab. Die in der Trübe mitgeführten Partikel sind schwerer als das sie umgebende Wasser. Nach der turbulenten "Einmischung" **9** der am Rand **3** durch den Trübezulauf **1** eingebrachten Trübe erfolgt deren laminare Bewegung durch den Absetzbehälter **4**. Die schweren Flocken beginnen zu sedimentieren, während das nun leichtere und klare Wasser gegen die Oberfläche aufzusteigen beginnt und in den Überlaufkanal zum Verlassen der Anlage **19** strömt. Eine mit sehr geringer Strömungsgeschwindigkeit im rechten Randbereich nach oben strömende Strömung **11** ist ein Ausgleichsvorgang zu dieser Strömung **9**. Da auch diese Strömung **11** sehr schwach ist, erfolgt auch hier eine Schlammabscheidung. Der am Boden **6** sedimentierte Schlamm wird durch zwei voneinander distanzierte Krählwerke **31a** und **31b** verdichtet. Nach Erreichen einer vorgegebenen Höhe wird der Schlamm entfernt.

Eine Kläranlage **19**, welche die oben dargelegte erfindungsgemäße Strömung zuläßt bzw. erzwingt, hat 'wie in den **Figur 3** und **Figur 4** dargestellt, einen quaderförmigen Absetzbehälter **20**. Diese Kläranlage **19** wird vorgefertigt zu ihrem Aufstellungsort gebracht, wo sie endmontiert wird. Sämtliche Baugruppen werden zur Montage von oben in den Absetzbehälter **20** eingehängt und an quer über diesen angeordneten, hier nicht im Detail beschriebenen Profilen, bevorzugt U-Profilen, montiert Die Abmessungen des Absetzbehälters **20** sind derart gewählt, daß er im Straßenverkehr mit einem Tieflader bzw. mit der Bahn transportierbar ist. D.h. seine Länge liegt maximal zwischen sechs und neun Metern [zwanzig bis dreißig Fuß], seine Breite überschreitet nicht 2,42 m und seine Höhe nicht 3,4 m.

An der linken oberen Schmalseite **17** des Absetzbehälters **20** ist der Trübezulauf **24** angeordnet. Der Trübezulauf **21** hat einen Einlaufstutzen **23**, der in einen Einlaufkasten **24** mündet. In den Einlaufkasten **24** werden die für die Flockung notwendigen Flockungsmittel eingebracht. Mit dem Einlaufkasten **24** wird die Trübe über die Breite des Behälters **20** an dessen linken Schmalseite **17** verteilt. In den Einlaufkasten **24** mündet ein Entnahmerohr **25**, mit dem Proben aus der eingebrachten Trübe entnommen werden können. Die entnommenen Trübeproben werden automatisch analysiert. Je nach Analyseergebnis wird durch eine nicht dargestellte Regeleinrichtung eine entsprechende Menge Flockungsmittel bzw. -hilfe noch vor dem Eintritt in den Einlaufstutzen **23** zugegeben.

Auf der rechten Schmalseite **22** des Behälters **20** in **Figur 3** ist der Auslaß **29** für das gereinigte Prozeßwasser angeordnet. Das Prozeßwasser wird mit einem Rohr **30** weggeführt.

Die hier dargestellte Kläranlage **19** hat zwei identisch aufgebaute Krählwerke **31a** und **31b**. Jedes Krählwerk **31a** und **31b** hat einen Antriebsmotor **33**, der über ein Untersetzungsgetriebe **34** eine vertikal stehende Welle **37** antreibt. Die Welle **37** ist in einem auf dem Innenboden **46** des Absetzbehälters **20** angeordneten Lager **35** gelagert. Die beiden Lager **35** und die beiden Wellen **37** liegen bis auf eine Toleranz in der Längsmittelebene **42** des Behälters **20**. An jeder Welle **37** ist in deren unterem Bereich mittels einer Halteklammer **39** ein vierflügeliges Verdichtergitter **41** befestigt. Jedes Verdichtergitter **41** dreht sich mit der vertikalen Welle mit einer langsamen Drehbewegung **40** von etwa einer Umdrehung pro Minute an. Beide Wellen drehen sich gleichsinnig. Jeder Flügel des Verdichtergitters **41** weist zueinander parallel verlaufende radiale und axiale Stäbe **43** und **45** auf. Diese Stäbe **43** und **45** zerschneiden den auf dem Behälterboden **46** abgesetzten Schlamm zu dessen weiterer Verdichtung. Daß gewisse Schlammzonen hierbei nicht erreicht werden, spielt keine Rolle. Es ergeben sich nämlich an den Grenzflächen zu den stillstehenden Zonen die gewünschten flockenzerstörenden Scherkräfte, die den Schlamm weiter eindicken. Der auf dem Boden **46** liegende nun verdichtete Schlamm wird von Zeit zu Zeit durch die im Boden **46** angeordneten Absaugöffnungen **47a** und **47b** über die daran angeschlossenen Absaugleitungen **49a** und **49b** abgesaugt.

Wie bereits oben ausgeführt, ist durch die quaderförmige Behälterform gegenüber der bekannten kreiszylindrischen ein Transport im komplett montierten Zustand der Kläranlage auf einem Lastwagen oder mit der Bahn zum Einsatzort möglich.

Sollte sich im Betrieb später einmal ein höherer Trübeanfall ergeben, kann ein weiterer, bevorzugt baugleicher Behälter montiert werden, wobei dann hier gegenüber den bekannten kreiszylindrischen Anlagen ein bedeutend geringerer Platzbedarf sich ergibt. Rechteckige Bodenflächen lassen sich nämlich ohne Zwischenflächenverlust im Gegensatz zu kreisförmigen nebeneinander anordnen.

Die oben beschriebene erfindungsgemäße Kläranlage ist mit einem Lastwagen transportierbar. D.h. sie ist nicht ortafest ausbildbar. Sie kann in dieser Ausführungsart bei einem vorübergehenden höheren Trübeanfall zu jedem Ort geschafft werden, um dort Abhilfe zu schaffen.

Anstelle eines quaderförmigen Absetzbehälters könnte lediglich zum Erreichen einer verbesserten Partikelabsetzung auch, wie bei den bekannten Anlagen, ein kreiszylindrischer verwendet werden, wenn der Trübeeinlaß an einem oberen Behälterrandbereich und nicht mehr im Zentrum erfolgen würde und der Ablauf (Überlauf) des gereinigten Prozeßwassers an einem hierzu gegenüberliegenden Randbereich. Bei einer derartigen Bauform würde jedoch der oben geschilderte Vorteil einer raumsparenden Aufstellung mehrerer identischer Kläranlagen mit quaderförmigen Absetzbehältern nebeneinander verloren gehen.

Anstelle eines quaderförmigen (ein Würfel ginge selbstverständlich auch) Absetzbehälters könnte auch ein prismatischer mit einer dreieckigen Grundfläche verwendet werden, wobei dann der Trübeeinlaß bevorzugt am oberen Rand einer Ecke und der Prozeßwasserauslaß an der hierzu gegenüberliegenden Seitenwand erfolgen sollte. Durch eine derartige Ausgestaltung würde sich nämlich die Fließgeschwindigkeit vom Einlaß zum Auslaß hin laufend verringern, wodurch die kleineren (leichteren) Partikel dann mehr Zeit zum Absetzen hätten. Auch müssen seitliche Wände nicht unbedingt vertikal stehen, sie können auch eine Neigung nach außen aufweisen.

Alle von der Quader- bzw. der Würfelform abweichenden Formen haben jedoch bei mehreren zusammengestellten Anlagen gleichen Fassungsvermögens einen größeren Gesamtflächenbedarf (mit Ausnahme der dreieckförmigen).

Im oben dargelegten Ausführungsbeispiel sind im Absetzbehälter **20** zwei Krählwerke **31a** und **31b** mit horizontalen Drehachsen **40** für die vierflügeligen Verdichtergitter **41** angeordnet. Die Achsen **40** sind an den beiden Längsseiten **51**a und **51b** gelagert. Je nach gewählter Längsabmessung des Absetzbehälters **20** können nun mehr oder weniger Krählwerke in diesem angeordnet werden. Die horizontalen Achsen **40** wird man bevorzugt senkrecht zur Hauptströmungsrichtung der Trübe anordnen, damit hierdurch deren Fließgeschwindigkeit reduziert wird. Diese senkrechte Anordnung ist jedoch nicht zwingend. Es können auch andere Winkel zur Hauptströmungsrichtung der Trübe ausgewählt werden. Die horizontale Drehachse für das Verdichtergitter könnte sogar parallel zur Hauptströmungsrichtung der Trübe (also eine Lagerung an den Behälterschmalseiten) vorgesehen werden.

## Patentansprüche

1. Verfahren zur Reinigung einer Trübe, bei der diese auf ihrem reinigenden Absetzweg in einer horizontalen Strömungsrichtung mit vernachlässigbarer vertikaler Strömungsrichtungskomponente geführt wird.

2. Verfahren nach Anspruch 1, **dadurch gekennzeichnet**, daß die Trübe zur Reinigung an einer Behälterseite **(3; 17)** eingelassen wird, anschließend eine Flockung erfolgt und ein Absetzen der flockenden Partikel der Trübe auf einem Absetzweg zu einer anderen, bevorzugt der gegenüberliegenden Behälterseite **(5; 22)** erfolgt, an der das von den Partikeln gereinigte Prozeßwasser zum Abfluß gebracht wird.

3. Verfahren nach Anspruch 1 oder 2, **dadurch gekennzeichnet**, daß die Trübe im oberen Bereich der einen Behälterseite **(3; 17)** eingelassen und bevorzugt ebenfalls im oberen Bereich der anderen Behälterseite **(5; 22)** das gereinigte Prozeßwasser ausgelassen wird bzw. insbesondere über die Oberkante dieser Behälterseite abfließt.

4. Vorrichtung **(19)** zur Durchführung des Verfahrens zur Reinigung einer Trübe nach einem der Ansprüche 1 bis 3, **gekennzeichnet durch** einen Absetzbehälter **(20)** für in der Trübe enthaltene Partikel, eine Einlaßeinrichtung, bevorzugt eine Behandlungsstrecke **(21)** für die Trübe für die Trübe an einer Behälterseite **(17)** und eine Auslaßeinrichtung **(29)** an einer anderen Behälterseite **(22)**, insbesondere der gegenüberliegenden.

5. Vorrichtung **(19)** nach Anspruch 4, **dadurch gekennzeichnet,** daß die Einlaßeinrichtung **(21)** im oberen Bereich der einen Behälterseite **(17)** und die Auslaßeinrichtung **(29)** bevorzugt im oberen Bereich der anderen Seite **(22)** angeordnet ist, insbesondere als Überlauf über deren obere Kante ausgebildet ist.

6. Vorrichtung **(19)** nach Anspruch 4 oder 5, **dadurch gekennzeichnet**, daß der Absetzbehälter **(20)** quaderförmig ausgebildet ist.

7. Vorrichtung **(19)** nach einem der Ansprüche 4 bis 6, **gekennzeichnet durch** wenigstens ein im Absetzbehälter **(20)** angeordnetes Krählwerk **(31a, 31b)** mit einem sich um eine vertikal stehende Well**e (37)** drehenden Verdichtergitter **(41)**.

8. Vorrichtung **(19)** nach einem der Ansprüche 4 bis 7, **dadurch gekennzeichnet**, daß die Abmessungen des Absetzbehälters **(20)** derart gewählt sind, daß er im Straßenverkehr bzw. mit der Bahn, vorzugsweise bereits mit vormontierten Baugruppen für die vollständige Vorrichtung (Kläranlage) transportierbar ist, wobei er bevorzugt eine maximale Länge von 6,2 m bzw. 9,1 m [zwanzig bzw. dreißig Fuß], eine maximale Breite von 2,42 m und eine maximale Höhe von 3,4 m nicht übersteigt.
